# EUROPÄISCHE PATENTSCHRIFT

(11) **EP 2 855 219 B1**
(45) Veröffentlichungstag und Bekanntmachung des Hinweises auf die Patenterteilung: **03.03.2021**
(21) Anmeldenummer: 13720951.6
(22) Anmeldetag: 07.05.2013
(51) Int. Cl.: B60T 8/32, B60T 13/66, B60T 13/74

(54) **BREMSSYSTEM FÜR EIN MOTORRAD, VERFAHREN ZUM MONTIEREN EINES BREMSSYSTEMS AN EINEM MOTORRAD UND VERFAHREN ZUM ABBREMSEN EINES MOTORRADS**
BRAKE SYSTEM FOR A MOTORCYCLE, METHOD FOR INSTALLING A BRAKE SYSTEM ON A MOTORCYCLE, AND METHOD FOR BRAKING A MOTORCYCLE
SYSTÈME DE FREINAGE POUR UNE MOTOCYCLETTE, PROCÉDÉ DE MONTAGE D'UN SYSTÈME DE FREINAGE SUR UNE MOTOCYCLETTE ET PROCÉDÉ PERMETTANT DE FAIRE FREINER UNE MOTOCYCLETTE

(30) Priorität: 31.05.2012 DE 102012209223
(43) Veröffentlichungstag der Anmeldung: 08.04.2015
(73) Patentinhaber: Robert Bosch GmbH, 70442 Stuttgart (DE)
(72) Erfinder: BAREISS, Alexander, 87509 Immenstadt (DE); REINER, Juergen, 88167 Gestratz (DE)
(86) Internationale Anmeldenummer: PCT/EP2013/059459
(87) Internationale Veröffentlichungsnummer: WO 2013/178441

(56) Entgegenhaltungen:
- DE-A1-102009 009 269
- US-A1- 2011 233 994

## Beschreibung

Die Erfindung betrifft ein Bremssystem für ein Motorrad. Sie betrifft auch ein Motorrad. Ebenso betrifft die Erfindung ein Verfahren zum Montieren eines Bremssystems an einem Motorrad. Des Weiteren betrifft die Erfindung ein Verfahren zum Abbremsen eines Motorrads.

### Stand der Technik

In der DE 10 2009 040 169 A1 ist ein Bremssystem für einen Roller oder ein Motorrad beschrieben. Das Bremssystem weist eine hydraulische Bremsvorrichtung mit mindestens zwei Radbremszylindern auf, welche jeweils den Rädern verschiedener Achsen zugeordnet und an einem Hauptbremszylinder der hydraulischen Bremsvorrichtung angebunden sind. Außerdem hat das Bremssystem auch einen Elektromotor, wobei mittels eines generatorischen Betreibens des Elektromotors ein Rekuperationsmoment zusätzlich zu einem hydraulischen Bremsmoment eines Radbremszylinders auf eines der Räder des Rollers oder des Motorrads ausübbar ist.

Außerdem beschreibt die US 2011/0233994 A1 ein Bremssystem und ein Verfahren zum Kontrollieren einer regenerativen Bremsung. Zum regenerativen Bremsen ist ein Elektromotor an einem Rad ohne einen daran angeordneten Radbremszylinder eines Motorrads angeordnet.

### Offenbarung der Erfindung

Die Erfindung schafft ein Bremssystem für ein Motorrad mit den Merkmalen des Anspruchs 1, ein Motorrad mit den Merkmalen des Anspruchs 8 und ein Verfahren zum Abbremsen eines Motorrads mit den Merkmalen des Anspruchs 10.

Es wird darauf hingewiesen, dass unter dem Motorrad gemäß den straßenverkehrsrechtlichen Kategorien (Krad) ein Kraftrad, ein Kleinkraftrad, ein Leichtkraftrad, ein Motorroller, ein Motorfahrrad, ein Fahrrad mit Hilfsmotor und/oder ein Elektromotorroller verstanden werden kann. Es wird auch darauf hingewiesen, dass ein derartiges Motorrad nicht auf eine Ausstattung mit genau zwei Rädern begrenzt ist. Stattdessen kann ein derartiges Motorrad sowohl als Einspurfahrzeug als auch als Dreirad ausgebildet sein.

### Vorteile der Erfindung

Das mittels der Erfindung realisierbare Bremssystem ist gegenüber herkömmlichen Bremssystemen dadurch vereinfacht, dass an einer mittels eines Elektromotors zumindest abbremsbaren Achse keine hydraulische Bremskomponente, wie insbesondere ein Radbremszylinder, benötigt wird. Stattdessen kann gemäß der vorliegenden Erfindung ein Rad oder eine Achse ausschließlich mittels eines generatorischen Betreibens des Elektromotors abgebremst werden. Somit entfallen die Kosten, der Bauraumbedarf und/oder der Montageaufwand für mindestens einen herkömmlicher Weise zusätzlich benötigten Radbremszylinders

Da das betreffende Bremssystem aus bereits vorhandenen Komponenten, welche in Massenanfertigungen herstellbar sind, zusammensetzbar ist, fallen bei der Herstellung des Bremssystems vergleichsweise geringe Kosten auf. Außerdem weist das mittels der vorliegenden Erfindung nutzbare Bremssystem für ein Motorrad ein relativ geringes Gewicht auf. Der Bauraumbedarf des mittels der vorliegenden Erfindung nutzbaren Bremssystems ist ebenfalls gering. Des Weiteren ist eine Montage des mittels der vorliegenden Erfindung nutzbaren Bremssystems schnell und vergleichsweise sicher ausführbar.

In einer besonders vorteilhaften Ausführungsform der Erfindung ist der Elektromotor zusätzlich zum Antreiben mindestens eines Rads, bzw. einer Achse, einsetzbar. Durch diese Multifunktionalität des Elektromotors kann eine zusätzliche Beschleunigungskomponente an dem Motorrad eingespart werden. Somit entfallen auch die Kosten, das Gewicht und/oder Bauraumbedarf der herkömmlicher Weise zusätzlich benötigten Beschleunigungskomponente.

In einer Weiterbildung ist mittels der Steuervorrichtung zusätzlich die hydraulische Bremsmomentgröße vorgebbar und unter Berücksichtigung der Soll-Gesamt-Bremsmomentgröße und einer ermittelten oder bereitgestellten Information bezüglich eines maximal ausübbaren Kann-Generator-Bremsmoment, wobei mittels der Steuervorrichtung auch mindestens ein Ventil- und/oder Pumpen-Steuersignal an mindestens ein Ventil und/oder mindestens eine Pumpe der hydraulischen Bremsvorrichtung ausgebbar ist, durch welches das mindestens eine Ventil und/oder die mindestens eine Pumpe so ansteuerbar sind, dass das hydraulische Bremsmoment entsprechend der vorgegebenen hydraulischen Bremsmomentgröße auf mindestens das erste Rad ausübbar ist. In diesem Fall kann bei einer Ausführbarkeit eines vergleichsweise großen Kann-Generator-Bremsmoments ein relativ geringes hydraulisches Bremsmoment zumindest auf das erste Rad ausgeübt werden. Somit ist ein relativ großes Generator-Bremsmoment mittels des Elektromotors auf zumindest das zweite Rad ausübbar, wodurch eine vergleichsweise große Energiemenge generatorisch zurück gewinnbar ist. Die vorteilhafte Auslegung der Steuervorrichtung kann somit eine Rekuperations-Effizienz während eines Bremsvorgangs steigern.

Vorzugsweise ist der Elektromotor ein Radnabenmotor. Da das mindestens eine zweite Rad aufgrund der vorliegenden Erfindung ohne einen daran angeordneten Radbremszylinder vorteilhaft abwendbar ist, kann der an dem mindestens einen zweiten Rad vorhandene Bauraum zur freieren Gestaltung des Elektromotors genutzt werden. Die vorliegende Erfindung gewährleistet somit auch eine gesteigerte Designfreiheit, wodurch der Elektromotor als Radnabenmotor ausführbar ist. Außerdem können mittels der vorliegenden Erfindung die in einer äußeren Umgebung des mindestens einen zweiten Rads vorhandenen Freiräume besser ausgenutzt werden.

Vorteilhafter Weise umfasst der erste Bremskreis ein erstes Radeinlassventil, ein erstes Radauslassventil und eine erste Pumpe. Mittels der hier genannten Komponenten des ersten Bremskreises kann somit ein in dem mindestens einen ersten Radbremszylinder vorliegender Bremsdruck vorteilhaft beeinflusst werden. Außerdem ist mittels des ersten Bremskreises ein Anti-Blockier-System ausführbar. Aufgrund der dadurch realisierbaren ABS-Funktion kann einem Blockieren des mindestens einen ersten Rades während eines Abbremsens des Motorrads entgegen gewirkt werden.

In einer vorteilhaften Weiterbildung umfasst die hydraulische Bremsvorrichtung einen zweiten Bremskreis, an welchem der erste Radbremszylinder oder ein dem ersten Rad zuordbaren zweiter Radbremszylinder angebunden oder anbindbar ist. Somit kann die auf das mindestens eine erste Rad ausgeübte Bremsleistung auch zwischen zwei Bremskreisen aufgeteilt werden.

Beispielsweise umfasst der zweite Bremskreis ein zweites Radeinlassventil, ein zweites Radauslassventil und eine zweite Pumpe. Der zweite Bremskreis kann somit auch zum Aufbauen/Verhindern eines Bremsdrucks in dem ersten Radbremszylinder oder in dem zweiten Radbremszylinder genutzt werden.

Vorzugsweise ist der zweite Bremskreis an dem ersten Hauptbremszylinder oder an einem zweiten Hauptbremszylinder angebunden oder anbindbar ist. Der Fahrer kann somit in den zweiten Bremskreis hineinbremsen.

Die hier genannten Vorteile sind auch bei einem Motorrad mit einem entsprechenden Bremssystem gewährleistet. Die gilt insbesondere, sofern das Motorrad ein Einspurfahrzeug, ein motorisiertes Dreirad, ein Kraftrad, ein Kleinkraftrad, ein Leichtkraftrad, ein Motorroller, ein Motorfahrrad, ein Fahrrad mit Hilfsmotor und/oder ein Elektromotorroller ist.

Der Weiter sind die Vorteile auch durch ein Ausführen eines derartigen Verfahrens zum Montieren eines Bremssystems an einem Motorrad und ein Ausführen eines korrespondierenden Verfahrens zum Abbremsen eines Motorrads realisierbar.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer ersten Ausführungsform des Bremssystems;
- Fig. 2: eine schematische Darstellung einer zweiten Ausführungsform des Bremssystems;
- Fig. 3: ein Flussdiagramm zum Erläutern eines nicht unter die Erfindung fallenden Verfahrens zum Montieren eines Bremssystems an einem Motorrad; und
- Fig. 4: ein Flussdiagramm zum Erläutern einer Ausführungsform des Verfahrens zum Abbremsen eines Motorrads.

### Ausführungsformen der Erfindung

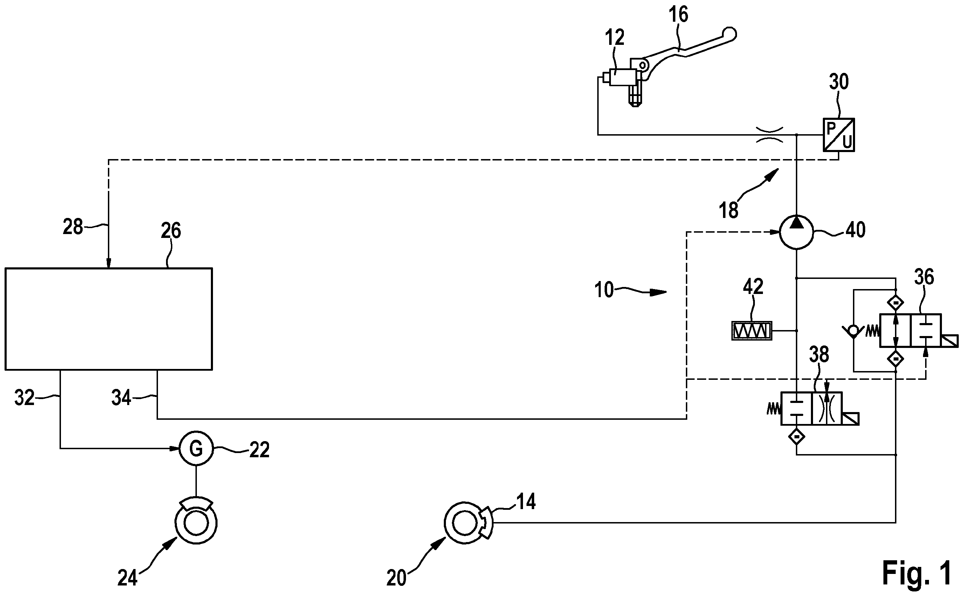

Fig. 1 zeigt eine schematische Darstellung einer ersten Ausführungsform des Bremssystems.

Das in Fig. 1 schematisch dargestellte Bremssystem ist insbesondere zur Nutzung an einem Motorrad ausgelegt. Unter dem Motorrad kann gemäß den straßenverkehrsrechtlichen Kategorien (Krad) ein Kraftrad, ein Kleinkraftrad, ein Leichtkraftrad, ein Motorroller, ein Motorfahrrad, ein Fahrrad mit Hilfsmotor und/oder ein Elektromotorroller verstanden werden. Das Motorrad kann als Einspurfahrzeug ausgelegt sein. Ebenso kann das Motorrad auch als ein motorisiertes Dreirad ausgebildet sein. Wie nachfolgend genauer ausgeführt wird, ist das Bremssystem der Fig. 1 aufgrund seines niedrigen Gewichts, seines geringen Bauraumbedarfs und seiner billigen Herstellbarkeit für einen Käufer/Benutzer der hier aufgezählten Motorradtypen leicht akzeptierbar und kann somit den Käufer/Benutzer zur Ausstattung seines Motorrads mit einem umweltfreundlicheren Bremssystem anregen.

Das Bremssystem der Fig. 1 weist eine hydraulische Bremsvorrichtung 10 auf. Die hydraulische Bremsvorrichtung 10 umfasst zumindest einen ersten Hauptbremszylinder 12 und mindestens einen ersten Radbremszylinder 14. Der erste Hauptbremszylinder 12 kann an einem (ersten) Bremsbetätigungselement 16, wie beispielsweise einem Handbremshebel, derart angeordnet sein, dass mittels eines Betätigens des (ersten) Bremsbetätigungselements 16 mindestens ein verstellbarer Kolben innerhalb des ersten Hauptbremszylinders 12 so verstellbar ist, dass ein Innendruck in zumindest einer Druckkammer des ersten Hauptbremszylinders 12 steigerbar ist. Der mindestens eine erste Radbremszylinder 14 ist mit dem ersten Hauptbremszylinder 12 zumindest über einen ersten Bremskreis 18 hydraulisch verbunden oder verbindbar, wodurch ein Bremsdruck in dem mindestens einen ersten Radbremszylinder 14 mittels des gesteigerten Innendrucks in der Druckkammer des ersten Hauptbremszylinders 12 aufbaubar ist. Außerdem ist der mindestens eine erste Radbremszylinder 14 zumindest einem ersten Rad 20 derart zuordbar/zugeordnet, dass das mindesten eine (rotierende) erste Rad 20 mittels des mindestens einen ersten Radbremszylinders 14 abbremsbar ist. Das mindestens eine erste Rad 20 weist somit mindestens einen ersten Radbremszylinder 14 in seiner unmittelbaren äußeren Umgebung auf.

Zusätzlich hat das Bremssystem auch einen Elektromotor 22, welcher mindestens einem zweiten Rad 24 derart zuordbar/zugeordnet ist, das zumindest das zweite Rad 24 mittels des Elektromotors 22 abbremsbar ist. Bei dem Bremssystem der Fig. 1 ist der Elektromotor 22 außerdem mindestens einem Radbremszylinder-freien Rad 24 als dem mindestens einen zweiten Rad 24 zuordbar. Darunter kann verstanden werden, dass der Elektromotor 22 so ausgelegt ist oder (mittels einer unter genauer beschriebenen Steuervorrichtung 26) so ansteuerbar ist, dass das mindestens eine Radbremszylinder-freie Rad 24 ausschließlich mittels des Elektromotors 22 (unter Verzicht auf eine Anordnung und eine Nutzung eines Radbremszylinders an dem mindestens einen Radbremszylinder-freie Rad 24) abbremsbar ist. Somit weist das mindestens eine zweite Rad 24 nach einer beendeten Montage des Bremssystems in seiner unmittelbaren äußeren Umgebung keinen Radbremszylinder auf. Unter dem mindestens einen Radbremszylinder-freien Rad 24 kann somit auch verstanden werden, dass eine unmittelbare äußere Umgebung des mindestens einen Radbremszylinder-freien Rads 24 frei von einem Radbremszylinder ist.

Außerdem liegt zwischen dem mindestens einen zweiten Radbremszylinder-freien Rad 24 und dem mindestens einen Hauptbremszylinder 12, bzw. einem entsprechenden Hydraulikmodul keine Seilzugverbindung vor. Darunter kann auch verstanden werden, dass eine unmittelbare äußere Umgebung des mindestens einen Radbremszylinder-freien Rads 24 frei von einem Seilzug, bzw. einer Komponente eines Seilzugs, ist.

Das Bremssystem der Fig. 1 ist insbesondere für ein als Hybrid- oder Elektrofahrzeug ausgebildetes Motorrad nutzbar. Aufgrund des Fehlens mindestens eines Radbremszylinders an dem Radbremszylinder-freien Rad 24 ist mittels des generatorischen Betreibens des Elektromotors 22 ein größeres Generator-Bremsmoment beim Abbremsen des mindestens einen Radbremszylinder-freien Rads 24 ausführbar, wodurch eine Rekuperations-Effizienz des Elektromotors 22 steigerbar ist. Durch diesen gesteigerten rekuperativen Einsatz des Elektromotors kann zusätzliche Energie zurück gewonnen werden, welche in ein Bordnetz einspeicherbar oder zum Wiederaufladen einer Batterie nutzbar ist. Mittels der vorliegenden Erfindung ist somit auch ein CO2-Ausstoß eines Motorrads reduzierbar, wodurch dessen Betrieb umweltfreundlicher gestaltbar ist.

Aufgrund des mindestens einen zweiten Radbremszylinder-freien Rads 24 hat das Bremssystem für ein Motorrad ein niedrigeres Gewicht, einem geringeren Bauraumbedarf und reduzierte Herstellungskosten, wodurch die Akzeptanz eines als Hybrid- oder als Elektrofahrzeug ausgebildeten Motorrads bei einem Benutzer des Bremssystems gesteigert wird. Auf diese Weise kann ein Benutzer gezielt zum Kauf eines als Hybrid- oder Elektrofahrzeug ausgebildeten Motorrads angeregt werden.

In einer vorteilhaften Ausführungsform ist der Elektromotor ein Radnabenmotor. Da die vorliegende Erfindung ein Abbremsen des mindestens einen zweiten Rads 24 bewirkt, ohne dass dazu ein Radbremszylinder in der unmittelbaren äußeren Umgebung des mindestens einen zweiten Rads 24 anzubringen ist, ist eine größere Designfreiheit bei der Ausbildung des Elektromotors 22 realisiert. Insbesondere können somit die an dem mindestens einen zweiten Rad 24 vorhandenen Freiräume besser ausgenutzt werden.

In einer vorteilhaften Weiterbildung kann der Elektromotor 22 auch zu einem Beschleunigen zumindest des zweiten Rads 24 ausgelegt/ansteuerbar sein. Durch diese Multifunktionalität des Elektromotors 22 kann ein zusätzlicher Motor zum Beschleunigen der Räder 20 und 24 an dem Motorrad eingespart werden. Dies ermöglicht ein niedrigeres Gewicht des Motorrads und reduziert dessen Herstellungskosten.

In einer vorteilhaften Ausführungsform weist das Motorrad genau ein erstes Rad 20 und ein zweites Rad 24 auf. Das hier beschriebene Bremssystem ist jedoch nicht auf eine Auslegung für ein derartiges Motorrad mit genau zwei Rädern 20 und 24 limitiert. In einer bevorzugten Ausführungsform sind das mindestens eine erste Rad 20 ein Vorderrad und das mindestens eine zweite Rad 24 ein Hinterrad. Beispielsweise können anstelle von nur einem ersten Rad 20 auch zwei erste Räder 20 einer gemeinsamen Fahrzeugachse, wie beispielsweise der Vorderachse, zugeordnet sein. Entsprechend können auch zwei zweite Räder 24 einer gemeinsamen Fahrzeugachse zugeordnet sein, welche beispielsweise die Hinterachse ist. In beiden Fällen ist ein Abstand zwischen der Mitte der Radaufstandsflächen vorzugsweise nicht größer als 465 mm. Die Verwendbarkeit des hier beschriebenen Bremssystems ist jedoch nicht auf eine derartige Räderaufteilung limitiert.

Das Bremssystem weist auch eine Steuervorrichtung 26 auf. Die Steuervorrichtung 26 ist derart ausgelegt, dass mittel der Steuervorrichtung 26 eine Soll-Generator-Bremsmomentgröße festlegbar ist. Das Festlegen der Soll-Generator-Bremsmomentgröße kann unter Berücksichtigung einer ermittelten oder bereitgestellten Soll-Gesamt-Bremsmomentgröße 28 bezüglich eines mittels einer Betätigung des (ersten) Bremselements 16 durch einen Fahrer vorgegebenen und auf zumindest die zwei Räder 20 und 24 auszuübenden Soll-Gesamt-Bremsmoments erfolgen. Die Soll-Gesamt-Bremsmomentgröße 28 kann beispielsweise ein Sensorsignal eines an dem ersten Hauptbremszylinder 12 oder an dem ersten Bremskreis 18 angebundenen Drucksensors 30 sein. Insbesondere ein Vordruck ist als Soll-Gesamt-Bremsmomentgröße 28 vorteilhaft auslegbar. Als Alternative oder als Ergänzung dazu kann jedoch auch ein Sensorsignal eines an dem Bremsbetätigungselement 16 angeordneten Sensors, mittels welchem eine Betätigungsstärke der Betätigung des (ersten) Bremsbetätigungselements 16 ermittelbar und ausgehbar ist, als Soll-Gesamt-Bremsmomentgröße 28 von der Steuervorrichtung 26 berücksichtigt werden.

Außerdem kann das Festlegen der Soll-Generator-Bremsmomentgröße auch unter (zusätzlicher) Berücksichtigung einer ermittelten, vorgegebenen oder geschätzten hydraulischen Bremsmomentgröße bezüglich eines auf zumindest das erste Rad 20 ausgeübten hydraulischen Bremsmoments des mindestens einen ersten Radbremszylinders 14 erfolgen. Die Soll-Generator-Bremsmomentgröße korreliert zu einer Differenz zwischen der Soll-Gesamt-Bremsmomentgröße 28 und der ermittelten, vorgegebenen oder geschätzten hydraulischen Bremsmomentgröße.

Des Weiteren kann beim Festlegen der Soll-Generator-Bremsmomentgröße auch mindestens eine ermittelte und/oder bereitgestellte Information bezüglich eines maximal mittels des Elektromotors ausführbaren Kann-Generator-Bremsmoments erfolgen. Die ermittelte und/oder bereitgestellte Information kann beispielsweise eine Information bezüglich einer Geschwindigkeit des Fahrzeugs und/oder eines Aufladezustands mindestens einer Fahrzeugbatterie umfassen. Ein generatorisches Betreiben des Elektromotors 22 ist in der Regel nur möglich, sofern die Geschwindigkeit des Fahrzeugs über einer Generator-Einsetz-Mindestgeschwindigkeit liegt und eine mittels des Elektromotors 22 angebundene Fahrzeugbatterie noch nicht vollständig aufgeladen ist. Durch das Berücksichtigen der mindestens einen Information bezüglich des maximal mittels des Elektromotors ausführbaren Kann-Generator-Bremsmoments beim Festlegen der Soll-Generator-Bremsmomentgröße kann somit der aktivierte Betrieb des Elektromotors 22 an diese Parameter angepasst werden.

Vorteilhafter Weise ist mittels der Steuervorrichtung 26 ein Elektromotor-Steuersignal 32 an den Elektromotor 22 ausgehbar, durch welches der Elektromotor 22 so ansteuerbar ist, dass ein der (festgelegten) Soll-Generator-Bremsmomentgröße entsprechendes Generator-Bremsmoment auf mindestens das zweite Rad 24 ausübbar ist. Bevorzugter Weise sind die Soll-Generator-Bremsmomentgröße so festlegbar und der Elektromotor so ansteuerbar, dass das Generator-Bremsmoment einer Differenz zwischen dem Soll-Gesamt-Bremsmoment und dem hydraulischen Bremsmoment entspricht. Somit ist die von dem Fahrer vorgegebene Fahrzeugverzögerung verlässlich einhaltbar.

Außerdem kann die hydraulische Bremsmomentgröße mittels der Steuervorrichtung 26 zusätzlich festlegbar sein. Vorzugsweise erfolgt das Festlegen der hydraulischen Bremsmomentgröße unter Berücksichtigung der Soll-Gesamt-Bremsmomentgröße 28 und der ermittelten oder bereitgestellten Information bezüglich des Kann-Generator-Bremsmoments. Somit können die Funktionsweisen des mindestens einen ersten Radbremszylinders 14 und des Elektromotors 22 vorteilhaft an eine aktuell vorliegende generatorische Einsetzbarkeit des Elektromotors 22 angepasst werden. Sofern aufgrund der aktuellen Fahrzeuggeschwindigkeit und des Aufladezustands der Batterie der Elektromotor 22 als Generator voll nutzbar ist, kann damit ein relativ niedriges hydraulisches Bremsmoment auf das mindestens eine erste Rad 20 ausgeübt werden. In diesem Fall kann ein vergleichsweise großes Generator-Bremsmoment des Elektromotors 22 zum schnellen Aufladen der Batterie genutzt werden. Demgegenüber kann bei einer nicht/kaum gewährleisteten Einsetzbarkeit des Elektromotors 22 als Generator das hydraulische Bremsmoment des mindestens einen ersten Radbremszylinders 14 vergleichsweise groß vorgegeben werden. Somit ist trotz der nicht/kaum gewährleisteten Einsetzbarkeit des Elektromotors 22 als Generator noch ein schnelles Abbremsen des Motorrads möglich.

Zum Einstellen des hydraulischen Bremsmoments des mindestens einen ersten Radbremszylinders 14 gemäß der festgelegten hydraulischen Bremsmomentgröße kann die Steuervorrichtung 26 mindestens ein Ventil- und/oder Pumpen-Steuersignal 34 an mindestens ein Ventil 36 und 38 und/oder mindestens eine Pumpe 40 der hydraulischen Bremsvorrichtung 10 ausgeben, durch welches das mindestens eine Ventil 36 und 38 und/oder die mindestens eine Pumpe 40 so ansteuerbar sind, dass das hydraulische Bremsmoment entsprechend der vorgegebenen hydraulischen Bremsmomentgröße auf zumindest das erste Rad 20 ausübbar ist. Die festgelegte hydraulische Bremsmomentgröße kann somit mindestens eine die Betriebsweise des mindestens einen Ventils 36 und 38 und/oder der mindestens einen Pumpe 40 beschreibende oder festlegende Größe umfassen. Beispielsweise kann die hydraulische Bremsmomentgröße einen Soll-Zustand, eine Soll-Leistung und/oder einen Soll-Versorgungsstrom des mindestens einen Ventils 36 und 38 und/oder der mindestens einen Pumpe 40 umfassen. Die hydraulische Bremsmomentgröße ist jedoch nicht auf die hier aufgezählten Beispiele limitiert.

Vorteilhafterweise umfasst der erste Bremskreis 18 ein erstes Radeinlassventil 36, ein erstes Radauslassventil 38 und eine erste Pumpe 40. Dies gewährleistet eine verlässliche Einstellbarkeit des hydraulische Bremsmoment des mindestens einen ersten Radbremszylinders 14. Mittels der Ausstattung des ersten Bremskreises 18 mit einer Speicherkammer 42, beispielsweise einer Niederdruckspeicherkammer, kann der erste Bremskreis 18 auch für eine ABS-Regelung ausgelegt werden. Es wird jedoch darauf hingewiesen, dass die hier beschriebenen Komponenten des ersten Bremskreises 18 lediglich beispielhaft zu interpretieren sind. Die Anwendbarkeit der erfindungsgemäßen Technologie ist nicht auf eine Ausstattung des Bremssystems mit einem derartigen Bremskreis 18 limitiert.

Das in Fig. 1 schematisch dargestellte Bremssystem kann mittels einer einfachen Programmierung der Steuervorrichtung 26 zum Ausführen der vorausgehend beschriebenen Funktionen ausgelegt werden. Sofern ein Bremswunsch des Fahrers, beispielsweise mittels des Drucksensors 30, erkannt wird, kann in Verbindung mit einer normalen Bremsung der Elektromotor 22 zur Rekuperation benutzt werden. Sofern die hydraulische Bremsmomentgröße mittels der Steuervorrichtung 26 nicht festlegbar ist, kann der Fahrer im Laufe der sich reduzierenden Geschwindigkeit durch ein Nachbremsen eine entfallende Bremswirkung des Elektromotors 22 kompensieren. Insbesondere kann in diesem Fall die Steuervorrichtung 26 so ausgelegt werden, dass ein generatorisches Bremsen mittels des Elektromotors 22 nur bei geringen Verzögerungen erfolgt.

Als Alternative dazu kann die Steuervorrichtung 26 auch für eine Erkennung einer Blockierneigung des zweiten Rads 24 über einen Stromverlauf des generatorisch betriebenen Elektromotors 22 ausgelegt werden. In diesem Fall kann eine Verzögerungsenergie besser ausgenutzt werden.

Außerdem kann bei einer geeigneten Programmierung der Steuervorrichtung 26 auch bei einer maximaler Ausnutzung der Räder 20 und 24 rekuperiert werden. Somit können mittels des hier beschriebenen Bremssystems auch sehr kurze Anhaltewege realisiert werden. Insbesondere kann, sofern das erste Rad 20 ein Vorderrad und das zweite Rad 24 ein Hinterrad sind, eine dynamische Achlastverteilung so ausgenutzt werden, dass das Hinterrad/zweite Rad 24 überproportional entlastet wird und dadurch bis zu 90% der Bremsenergie mittels der Vorderrads/ersten Rads 20 auf die Straße übertragen wird. Somit kann auch eine begrenzte Bremsleistung des Elektromotors 22 vorteilhaft ausgeglichen werden.

Bei einer besonders vorteilhaften Ausführungsform der Steuervorrichtung 26 wird die hydraulische Bremsleistung des ersten Radbremszylinders 14 zu Beginn einer Bremsung reduziert/unterdrückt. Das Fahrzeug wird somit zu Beginn einer Bremsung im Wesentlichen mittels der generatorischen Bremsleistung des Elektromotors 22 abgebremst. Ab einer abnehmenden Einsetzbarkeit des Elektromotors 22 als Generator kann durch ein dosiertes Öffnen einer Absperrung im ersten Bremskreis 18, beispielsweise durch ein dosiertes Öffnen des Radeinlassventils 36, die Gesamt-Bremswirkung des Elektromotors 22 und des ersten Radbremszylinders 14 konstant gehalten werden. Ein leichtes Nachrutschen des Bremsbetätigungselements 16, welches dabei auftreten kann, wird von den meisten Fahrern kaum bemerkt oder als akzeptabel eingestuft.

Die Steuervorrichtung 26 kann in einer vorteilhaften Weiterbildung auch zur Ausführung der Funktion eines ABS-Modulators ausgelegt sein. Durch diese Multifunktionalität der Steuervorrichtung 26 können weitere Elektronikkomponenten am Bremssystem eingespart werden.

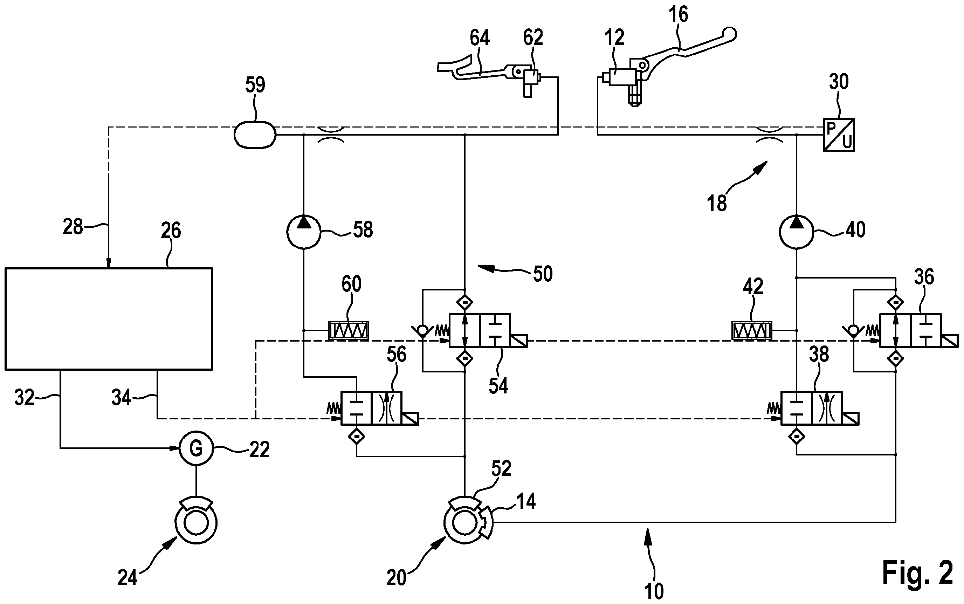

Fig. 2 zeigt eine schematische Darstellung einer zweiten Ausführungsform des Bremssystems.

Das in Fig. 2 schematisch wiedergegebene Bremssystems weist als Ergänzung zu der vorhergehend beschriebenen Ausführungsform noch einen zweiten Bremskreis 50 der hydraulischen Bremsvorrichtung 10 auf, an welchem ein dem ersten Rad 20 zuordbarer/zugeordneter zweiter Radbremszylinder 52 angebunden oder anbindbar ist. Als Alternative zu einer Anordnung von zwei Radbremszylindern 14 und 52 an dem ersten Rad 20 kann auch ein an den zwei Bremskreisen 18 und 50 jeweils angebundener Radbremszylinder verwendet werden.

Der zweite Bremskreis 50 kann beispielsweise noch ein zweites Radeinlassventil 54, ein zweites Radauslassventil 56 und eine zweite Pumpe 58 umfassen. Außerdem kann der zweite Bremskreis 50 mit einer Speicherkammer 60, wie beispielsweise einer Niederdruckspeicherkammer, ausgestattet sein. In diesem Fall ist eine ABS-Regelung auch mittels des zweiten Bremskreises 50 ausführbar. Ein weiterer Drucksensor 59 ist ebenfalls in dem zweiten Bremskreis 50 anordbar. Die hier aufgezählten Komponenten des zweiten Bremskreises 50 sind jedoch nur beispielhaft zu interpretieren und schränken die Ausbildbarkeit des zweiten Bremskreises 50 nicht ein.

Bei der Ausführungsform der Fig. 2 ist der zweite Bremskreis 50 an einem zweiten Hauptbremszylinder 62 angebunden oder anbindbar. Bevorzugter Weise ist dem zweiten Hauptbremszylinder 62 ein weiteres Bremsbetätigungselement 64, wie beispielsweise ein Fußbremshebel, zugeordnet. Der Fahrer hat somit die Möglichkeit, wahlweise eines von zwei Bremsbetätigungselementen 16 und 64 seines Motorrads zu benutzen. Als Alternative zu der Ausführungsform der Fig. 2 kann der zweite Bremskreis 50 jedoch auch an dem ersten Hauptbremszylinder 12 angebunden sein, welcher in diesem Fall vorzugsweise als Tandemhauptbremszylinder ausgelegt ist.

Auch die Ventile 54 und 56 und die Pumpe 58 des zweiten Bremskreises 50 können mittels des Ventils- und/oder Pumpensteuersignals 34 der Steuervorrichtung 26 ansteuerbar sein. Das Bremssystem in Fig. 2 gewährleistet somit alle oben beschriebenen Vorteile. Insbesondere ist bei dem Bremssystem der Fig. 2 gewährleistet, dass der Fahrer (nahezu) keine Rückwirkungen der ausführbaren Verblendung an den Bremsbetätigungselementen 12 und 64 spürt. Das zweikreisige Bremssystem der Fig. 2 mit dem generatorisch betreibbaren Elektromotor 22 kann außerdem auch zum Ausführen der Funktionen eines ABS-Systems leicht ausgelegt werden.

Nachfolgend wird ein bevorzugter Betrieb der oben beschriebenen Ausführungen ausgeführt:
Bei einer Betätigung des mindestens einen Bremsbetätigungselements 16 (oder 64) wird Bremsflüssigkeit von dem angebundenen Hauptbremszylinder 12 (oder 52) in Richtung des mindestens einen Radbremszylinders 14 (und 52) verschoben. Gleichzeitig kann der Elektromotor 22 in einen Generatormodus umgeschaltet werden. Nach einem Überwinden des Lüftspiels des mindestens einen Radbremszylinders 14 (und 52) kann die hydraulische Bremswirkung des mindestens einen Radbremszylinders 14 (und 52) durch ein Schließen mindestens eines der Ventile 36 (und 54) unterbunden werden. Somit kann bei einer gewährleisten Einsetzbarkeit des Elektromotors 22 als Generator ein Bremsdruckaufbau in dem mindestens einen Radbremszylinders 14 (und 52) (nahezu) unterbunden und ausschließlich generatorisch gebremst werden. Dies gewährleistet eine vorteilhaft hohe Rekuperations-Effizienz.

Es empfiehlt sich, vor einem Schließen des mindestens einen Ventils 36 (und 54) das Lüftspiel zu überbrücken. Dies realisiert eine schnelle Aufbaubarkeit/Steigerbarkeit des hydraulischen Bremsmoments des mindestens einen Radbremszylinders 14 (und 52) bei einer abnehmenden Bremswirkung/Einsetzbarkeit des Elektromotors 22 als Generator. Das Überbrücken des Lüftspiels kann beispielsweise durch eine ermittelte Verzögerung und/oder einem gemessenen Druck festgestellt werden.

Bei einer abnehmenden Einsetzbarkeit des Elektromotors 22 als Generator kann durch das Öffnen des mindestens einen Ventils 36 (und 54) der Bremsdruck in dem mindestens einen Radbremszylinder 14 (und 52) gesteigert werden. Somit kann die abnehmende Bremswirkung des Elektromotors 22 automatisch so kompensiert werden, dass der Fahrer nicht Nachbremsen muss. Vorteilhafter Weise besitzt das ABS-System auch einen Drucksensor 30 (und 59), mit dem der Fahrerbremswunsch mit der eingestellten Bremswirkung abgleichbar ist.

Wenn der Fahrerbremswunsch das maximal ausführbare Kann-Generator-Bremsmoment des Elektromotors übersteigt, so kann ein zusätzlicher Bremsdruck in dem mindestens einen Radbremszylinder 14 (und 52) aufgebaut werden. Das Übersteigern des maximal ausführbaren Kann-Generator-Bremsmoment durch den Fahrerbremswunsch kann mittels des mindestens einen Drucksensors 30 (und 59) einfach und verlässlich festgestellt werden.

Führt die Bremssituation zu einer ABS-Regelung, dann kann das Bremssystem gemäß den herkömmlichen Verfahrensschritten moduliert werden. Auch im generatorischen Bereich kann durch Modulation der abgenommenen generatorischen Leistung eine Blockierung des mindestens einen zweiten Rads 20 verhindert werden. Es wird darauf hingewiesen, dass die Steuervorrichtung 26 auch mit einem bereits vorhandenen/herkömmlichen ABS-Steuergerät zusammen wirken kann.

Bei einem Fehlerfall des Elektromotors 22 bleibt die hydraulische Bremsvorrichtung 18 als Backup funktional. Bei einem Ausfall mindestens eines Bremskreises 18 (oder 50) der hydraulischen Bremsvorrichtung 10 ist zumindest die generatorische Bremswirkung des Elektromotors 22 noch vorhanden. Bei einer Ausstattung des Bremssystems mit zwei Bremskreisen 18 (oder 50) ist zusätzlich noch der vom Fehlerfall des anderen Bremskreises 18 (oder 50) nicht betroffene Bremskreis einsetzbar.

Ein Motorrad mit einem Bremssystem entsprechend einer der oben beschriebenen Ausführungsformen, welches ein Einspurfahrzeug, ein motorisiertes Dreirad, ein Kraftrad, ein Kleinkraftrad, ein Leichtkraftrad, ein Motorroller, ein Motorfahrrad, ein Fahrrad mit Hilfsmotor und/oder ein Elektromotorroller sein kann, ist mittels der ausgeführten Fig. 1 und 2 auch erläutert.

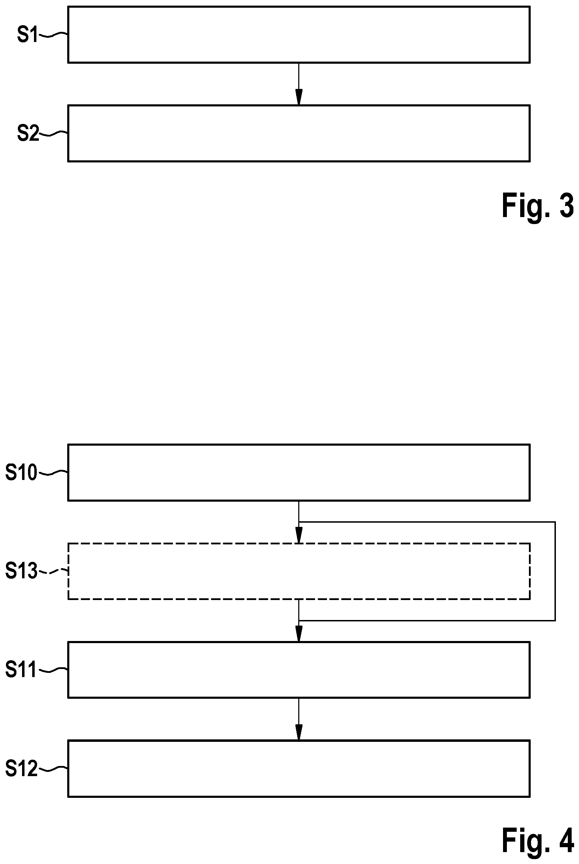

Fig. 3 zeigt ein Flussdiagramm zum Erläutern eines nicht unter die Erfindung fallenden Verfahrens zum Montieren eines Bremssystems an einem Motorrad.

In einem Verfahrensschritt S1 wird eine hydraulische Bremsvorrichtung mit zumindest einem ersten Hauptbremszylinder und mindestens einem ersten Radbremszylinder, welcher mit dem ersten Hauptbremszylinder zumindest über einen ersten Bremskreis hydraulisch verbunden oder verbindbar ist, an dem Motorrad angeordnet. Bezüglich der Ausbildbarkeit der hydraulischen Bremsvorrichtung wird auf die oben beschriebenen Ausführungsformen verwiesen. Der mindestens eine erste Radbremszylinder wird an zumindest einem ersten Rad des Motorrads derart angeordnet, dass das mindestens eine erste Rad bei einem Vorliegen eines Bremsdrucks in dem mindestens einen ersten Radbremszylinder mittels des mindestens einen ersten Radbremszylinders abgebremst wird.

In einem Verfahrensschritt S2 wird ein Elektromotor derart an dem Motorrad angeordnet, dass mindestens ein zweites Rad des Motorrads bei einem generatorischen Betrieb des Elektromotors abgebremst wird.

Die Reihenfolge der Verfahrensschritte S1 und S2 ist beliebig. Das Bremssystem kann an einem Einspurfahrzeug, einem motorisierten Dreirad, einem Kraftrad, einem Kleinkraftrad, einem Leichtkraftrad, einem Motorroller, einem Motorfahrrad, einem Fahrrad mit Hilfsmotor und/oder einem Elektromotorroller (als dem Motorrad) montiert werden. Es wird jedoch ausdrücklich darauf hingewiesen, dass die hydraulische Bremsvorrichtung derart an dem Motorrad angeordnet wird, dass das mindestens eine zweite Rad als mindestens ein Radbremszylinder-freies Rad ausschließlich bei dem generatorischen Betrieb des Elektromotors abgebremst wird.

Fig. 4 zeigt ein Flussdiagramm zum Erläutern einer Ausführungsform des Verfahrens zum Abbremsen eines Motorrads.

Bei der Ausführung des Verfahrens der Fig. 4 kann ein Einspurfahrzeug, ein motorisiertes Dreirad, ein Kraftrad, ein Kleinkraftrad, ein Leichtkraftrad, ein Motorroller, ein Motorfahrrad, ein Fahrrad mit Hilfsmotor und/oder ein Elektromotorroller als Motorrad abgebremst werden. Insbesondere können dabei die die oben beschriebenen Ausführungsformen von Bremssystemen eingesetzt werden. Die Ausführbarkeit des Verfahrens der Fig. 4 ist jedoch nicht auf die Benutzung der oben beschriebenen Ausführungsformen von Bremssystemen begrenzt.

In einem Verfahrensschritt S10 wird eine Soll-Gesamt-Bremsmomentgröße bezüglich eines mittels einer Betätigung eines Bremsbetätigungselements durch einen Fahrer vorgegebenes und mindestens auf ein erstes Rad und ein zweites Rad des Motorrads auszuübendes Soll-Gesamt-Bremsmoment ermittelt. Dabei kann beispielsweise einer der oben beschriebenen Sensoren verwendet werden.

Anschließend wird in einem Verfahrensschritt S11 eine Soll-Generator-Bremsmomentgröße unter Berücksichtigung zumindest der ermittelten Soll-Gesamt-Bremsmomentgröße festgelegt. Außerdem wird bei der Festlegung der Soll-Generator-Bremsmomentgröße zusätzlich eine ermittelte, vorgegebene oder geschätzte hydraulische Bremsmomentgröße bezüglich eines hydraulischen Bremsmoments, welches mittels mindestens eines ersten Radbremszylinders einer hydraulischen Bremsvorrichtung, der mit einem ersten Hauptbremszylinder der hydraulischen Bremsvorrichtung über zumindest einen ersten Bremskreis hydraulisch verbunden oder verbindbar ist, auf zumindest das erste Rad des Motorrads ausgeübt wird, berücksichtigt.

Ein Elektromotor wird in einem Verfahrensschritt S12 so angesteuert, dass ein der Soll-Generator-Bremsmomentgröße entsprechendes Generator-Bremsmoment mittels des Elektromotors auf mindestens das zweite Rad ausgeübt wird. Die Soll-Generator-Bremsmomentgröße wird so festgelegt und der Elektromotor wird so angesteuert, dass das Generator-Bremsmoment einer Differenz zwischen dem Soll-Gesamt-Bremsmoment und dem hydraulischen Bremsmoment entspricht und das mindestens eine zweite Rad als mindestens ein Radbremszylinder-freies Rad ausschließlich mittels des Elektromotors abgebremst wird.

Optionaler Weise kann das Verfahren auch einen Verfahrensschritt S13 umfassen, welcher vor dem Verfahrensschritt S11 ausgeführt wird. In dem Verfahrensschritt S13 wird die hydraulische Bremsmomentgröße unter Berücksichtigung der Soll-Gesamt-Bremsmomentgröße und einer ermittelten oder bereitgestellten Information bezüglich eines maximal ausübbaren Kann-Generator-Bremsmoments vorgegeben. Der Verfahrensschritt S13 umfasst auch ein Ansteuern mindestens eines Ventils und/oder einer Pumpe der hydraulischen Bremsvorrichtung derart, dass das hydraulische Bremsmoment entsprechend der vorgegebenen hydraulischen Bremsmomentgröße auf zumindest das erste Rad ausgeübt wird.

## Patentansprüche

1. Bremssystem für ein Motorrad mit:
einer hydraulischen Bremsvorrichtung (10) mit zumindest einem ersten Hauptbremszylinder (12) und
mindestens einem ersten Radbremszylinder (14), welcher mit dem ersten Hauptbremszylinder (12) zumindest über einen ersten Bremskreis (18) hydraulisch verbunden oder verbindbar ist und zumindest einem ersten Rad (20) derart zuordbar ist, dass das mindestens eine erste Rad (20) mittels des mindestens einen ersten Radbremszylinders (14) abbremsbar ist; einem Elektromotor (22), welcher mindestens einem zweiten Rad (24) derart zuordbar ist, dass zumindest das zweite Rad (24) mittels des Elektromotors (22) abbremsbar ist, wobei der Elektromotor (22) mindestens einem Radbremszylinder-freien Rad (24) als dem mindestens einen zweiten Rad (24) zuordbar ist; und
einer Steuervorrichtung (26), welche derart ausgelegt ist, dass mittels der Steuervorrichtung (26) eine Soll-Generator-Bremsmomentgröße festlegbar ist unter Berücksichtigung einer ermittelten oder bereitgestellten Soll-Gesamt-Bremsmomentgröße (28) bezüglich eines mittels einer Betätigung eines Bremsbetätigungselements (16, 64) durch einen Fahrer vorgegebenen und mindestens auf das mindestens eine erste Rad (20) und das mindestens eine zweite Rad (24) auszuübenden Soll-Gesamt-Bremsmoments und einer ermittelten, vorgegebenen oder geschätzten hydraulischen Bremsmomentgröße bezüglich eines hydraulischen Bremsmoments des mindestens einen ersten Radbremszylinders (14) auf zumindest das erste Rad (20), wobei mittels der Steuervorrichtung (26) auch ein Elektromotor-Steuersignal (32) an den Elektromotor (22) ausgebbar ist, durch welches der Elektromotor (22) so ansteuerbar ist, dass ein der Soll-Generator-Bremsmomentgröße entsprechendes Generator-Bremsmoment mittels des Elektromotors (22) auf mindestens das zweite Rad (24) ausübbar ist;
**dadurch gekennzeichnet, dass**
die Soll-Generator-Bremsmomentgröße mittels der Steuervorrichtung (26) so festlegbar ist und der Elektromotor (22) mittels der Steuervorrichtung (26) so ansteuerbar ist, dass das Generator-Bremsmoment einer Differenz zwischen dem Soll-Gesamt-Bremsmoment und dem hydraulischen Bremsmoment entspricht.

2. Bremssystem nach Anspruch 1, wobei mittels der Steuervorrichtung (26) zusätzlich die hydraulische Bremsmomentgröße vorgebbar ist unter Berücksichtigung der Soll-Gesamt-Bremsmomentgröße (28) und einer ermittelten oder bereitgestellten Information bezüglich eines maximal ausübbaren Kann-Generator-Bremsmoments, wobei mittels der Steuervorrichtung (26) auch mindestens ein Ventil- und/oder Pumpen-Steuersignal (34) an mindestens ein Ventil (36, 38, 54, 56) und/oder mindestens eine Pumpe (40, 58) der hydraulischen Bremsvorrichtung (10) ausgebbar ist, durch welches das mindestens eine Ventil (36, 38, 54, 56) und/oder die mindestens eine Pumpe (40, 58) so ansteuerbar sind, dass das hydraulische Bremsmoment entsprechend der vorgegebenen hydraulischen Bremsmomentgröße auf zumindest das erste Rad (20) ausübbar ist.

3. Bremssystem nach Anspruch 1 oder 2, wobei der Elektromotor (22) ein Radnabenmotor ist.

4. Bremssystem nach einem der vorhergehenden Ansprüche, wobei der erste Bremskreis (18) ein erstes Radeinlassventil (36), ein erstes Radauslassventil (38) und eine erste Pumpe (40) umfasst.

5. Bremssystem nach einem der vorhergehenden Ansprüche, wobei die hydraulische Bremsvorrichtung (10) einen zweiten Bremskreis (50) umfasst, an welchem der erste Radbremszylinder (14) oder ein dem ersten Rad (20) zuordbarer zweiter Radbremszylinder (52) angebunden oder anbindbar ist.

6. Bremssystem nach Anspruch 5, wobei der zweite Bremskreis (50) ein zweites Radeinlassventil (54), ein zweites Radauslassventil (56) und eine zweite Pumpe (58) umfasst.

7. Bremssystem nach Anspruch 5 oder 6, wobei der zweite Bremskreis (50) an dem ersten Hauptbremszylinder (12) oder an einem zweiten Hauptbremszylinder (62) angebunden oder anbindbar ist.

8. Motorrad mit einem Bremssystem nach einem der vorhergehenden Ansprüche.

9. Motorrad nach Anspruch 8, wobei das Motorrad ein Einspurfahrzeug, ein motorisiertes Dreirad, ein Kraftrad, ein Kleinkraftrad, ein Leichtkraftrad, ein Motorroller, ein Motorfahrrad, ein Fahrrad mit Hilfsmotor und/oder ein Elektromotorroller ist.

10. Verfahren zum Abbremsen eines Motorrads mit den Schritten:
Ermitteln einer Soll-Gesamt-Bremsmomentgröße (28) bezüglich eines mittels einer Betätigung eines Bremsbetätigungselements (16, 64) durch einen Fahrer vorgegebenes und mindestens auf ein erstes Rad (20) und ein zweites Rad (24) des Motorrads auszuübendes Soll-Gesamt-Bremsmoment (S10);
Festlegen einer Soll-Generator-Bremsmomentgröße unter Berücksichtigung der ermittelten Soll-Gesamt-Bremsmomentgröße (28) und einer ermittelten, vorgegebenen oder geschätzten hydraulischen Bremsmomentgröße bezüglich eines hydraulischen Bremsmoments, welches mittels mindestens eines ersten Radbremszylinders (14) einer hydraulischen Bremsvorrichtung (10), der mit einem ersten Hauptbremszylinder (12) der hydraulischen Bremsvorrichtung (10) über zumindest einen ersten Bremskreis (18) hydraulisch verbunden oder verbindbar ist, auf zumindest das erste Rad (20) des Motorrads ausgeübt wird (S11); und
Ansteuern eines Elektromotors (22) so, dass ein der Soll-Generator-Bremsmomentgröße entsprechendes Generator-Bremsmoment mittels des Elektromotors (22) auf mindestens das zweite Rad (24) ausgeübt wird (S12), wobei das mindestens eine zweite Rad (24) als mindestens ein Radbremszylinder-freies Rad (24) ausschließlich mittels des Elektromotors (22) abgebremst wird;
**dadurch gekennzeichnet, dass**
die Soll-Generator-Bremsmomentgröße so festgelegt und der Elektromotor (22) so angesteuert werden, dass das Generator-Bremsmoment einer Differenz zwischen dem Soll-Gesamt-Bremsmoment und dem hydraulischen Bremsmoment entspricht.

11. Verfahren nach Anspruch 10 mit den zusätzlichen Schritten (S13):
Vorgeben der hydraulischen Bremsmomentgröße unter Berücksichtigung der Soll-Gesamt-Bremsmomentgröße (28) und einer ermittelten oder bereitgestellten Information bezüglich eines maximal ausübbaren Kann-Generator-Bremsmoments; und
Ansteuern mindestens eines Ventils (36, 38, 54, 56) und/oder mindestens einer Pumpe (40, 58) der hydraulischen Bremsvorrichtung (10) derart, dass das hydraulische Bremsmoment entsprechend der vorgegebenen hydraulischen Bremsmomentgröße auf zumindest das erste Rad (20) ausgeübt wird.

12. Verfahren nach Anspruch 10 oder 11, wobei ein Einspurfahrzeug, ein motorisiertes Dreirad, ein Kraftrad, ein Kleinkraftrad, ein Leichtkraftrad, ein Motorroller, ein Motorfahrrad, ein Fahrrad mit Hilfsmotor und/oder ein Elektromotorroller als Motorrad abgebremst werden.

## Claims

1. Brake system for a motorcycle, having:
a hydraulic brake device (10) having at least one first master brake cylinder (12), and
at least one first wheel brake cylinder (14) which at least by way of a first brake circuit (18) is hydraulically connected, or able to be connected, to the first master brake cylinder (12), and is able to be assigned to at least one first wheel (20) in such a manner that the at least one first wheel (20) is able to be decelerated by means of the at least one first wheel brake cylinder (14);
an electric motor (22) which is able to be assigned to at least one second wheel (24) in such a manner that at least the second wheel (24) is able to be decelerated by means of the electric motor (22), wherein the electric motor (22) is able to be assigned to at least one wheel (24) without a wheel brake cylinder as the at least one second wheel (24); and
a control device (26) which is conceived in such a manner that by means of the control device (26) a nominal generator brake torque variable is able to be established while taking into account a determined or provided nominal total brake torque variable (28) in terms of a nominal total brake torque that is predefined by means of activating a brake activation element (16, 64) by a driver and is to be exerted at least on the at least one first wheel (20) and the at least one second wheel (24), and a determined, predefined or estimated hydraulic brake torque variable in terms of a hydraulic brake torque of the at least one first wheel brake cylinder (14) on the at least one first wheel (20), wherein by means of the control device (26) an electric-motor control signal (32) by way of which the electric motor (22) is able to be actuated in such a manner that a generator brake torque that corresponds to the nominal generator brake torque variable is able to be exerted at least on the second wheel (24) is also able to be emitted to the electric motor (22);
**characterized in that**
the nominal generator brake torque variable by means of the control device (26) is able to be established, and the electric motor (22) by means of the control device (26) is able to be actuated, such that the generator brake torque corresponds to a difference between the nominal total brake torque and the hydraulic brake torque.

2. Brake system according to Claim 1, wherein by means of the control device (26) the hydraulic brake torque variable is additionally able to be predefined while taking into account the nominal total brake torque variable (28) and a determined or provided item of information pertaining to a maximum potential generator brake torque that can be exerted, wherein by means of the control device (26) at least one valve and/or pump control signal (34) is also able to be emitted to at least one valve (36, 38, 54, 56) and/or at least one pump (40, 58) of the hydraulic brake device (10), the at least one valve (36, 38, 54, 56) and/or the at least one pump (40, 58) by way of said valve and/or pump control signal (34) being able to be actuated such that the hydraulic brake torque according to the predefined hydraulic brake torque variable is able to be exerted on at least the first wheel (20).

3. Brake system according to Claim 1 or 2, wherein the electric motor (22) is a wheel hub motor.

4. Brake system according to one of the preceding claims, wherein the first brake circuit (18) comprises a first wheel inlet valve (36), a first wheel outlet valve (38), and a first pump (40).

5. Brake system according to one of the preceding claims, wherein the hydraulic brake device (10) comprises a second brake circuit (50) to which the first wheel brake cylinder (14) or a second wheel brake cylinder (52) that is able to be assigned to the first wheel (20) is linked or able to be linked.

6. Brake system according to Claim 5, wherein the second brake circuit (50) comprises a second wheel inlet valve (54), a second wheel outlet valve (56), and a second pump (58).

7. Brake system according to Claim 5 or 6, wherein the second brake circuit (50) is linked or able to be linked to the first master brake cylinder (12) or to a second master brake cylinder (62).

8. Motorcycle having a brake system according to one of the preceding claims.

9. Motorcycle according to Claim 8, wherein the motorcycle is a single-track vehicle, a motorized tricycle, a powered two-wheeler, a moped, a light powered two-wheeler, a motor scooter, a motor-assisted bicycle, a bicycle with an auxiliary motor, and/or an electric scooter.

10. Method for decelerating a motorcycle, said method comprising the following steps:
determining a nominal total brake torque variable (28) in terms of a nominal total brake torque that is predefined by means of activating a brake activation element (16, 64) by a driver and is to be exerted at least on a first wheel (20) and a second wheel (24) of the motorcycle (S10);
establishing a nominal generator brake torque variable while taking into account the determined nominal total brake torque variable (28) and a determined, predefined or estimated hydraulic brake torque variable in terms of a hydraulic brake torque, which by means of at least one first wheel brake cylinder (14) of a hydraulic brake device (10) that by way of at least one first brake circuit (18) is hydraulically connected, or able to be connected, to a first master brake cylinder (12) of the hydraulic brake device (10) is exerted on at least the first wheel (20) of the motorcycle (S11); and
actuating an electric motor (22) such that by means of the electric motor (22) a generator brake torque that corresponds to the nominal generator brake torque variable is exerted (S12) on at least the second wheel (24), wherein the at least one second wheel (24) as at least one wheel (24) without a wheel brake cylinder is decelerated exclusively by means of the electric motor (22);
**characterized in that**
the nominal generator brake torque variable is established, and the electric motor (22) is actuated, such that the generator brake torque corresponds to a difference between the nominal total brake torque and the hydraulic brake torque.

11. Method according to Claim 10, comprising the additional steps (S13);
predefining the hydraulic brake torque variable while taking into account the nominal total brake torque variable (28) and a determined or provided item of information pertaining to a maximum potential generator brake torque that can be exerted; and
actuating at least one valve (36, 38, 54, 56) and/or at least one pump (40, 58) of the hydraulic brake device (10) in such a manner that the hydraulic brake torque is exerted on at least the first wheel (20) so as to correspond to the predefined hydraulic brake torque variable.

12. Method according to Claim 10 or 11, wherein a single-track vehicle, a motorized tricycle, a powered two-wheeler, a moped, a light powered two-wheeler, a motor scooter, a motor-assisted bicycle, a bicycle with an auxiliary motor, and/or an electric scooter are/is decelerated as the motorcycle.

## Revendications

1. Système de freinage pour une motocyclette, comprenant :
un dispositif de freinage hydraulique (10) comprenant au moins
un premier maître-cylindre de frein (12) et
au moins un premier cylindre de frein (14), lequel est relié ou peut être relié hydrauliquement au premier maître-cylindre de frein (12) au moins par le biais d'un premier circuit de frein (18) et peut être affecté à au moins une première roue (20) de telle sorte que l'au moins une première roue (20) peut être freinée au moyen de l'au moins un premier cylindre de frein (14) ; un moteur électrique (22), lequel peut être affecté à au moins une deuxième roue (24) de telle sorte qu'au moins la deuxième roue (24) peut être freinée au moyen du moteur électrique (22), le moteur électrique (22) pouvant être affecté à au moins une roue exempte de cylindre de frein (24) en tant que l'au moins une deuxième roue (24) ; et
un dispositif de commande (26), lequel est conçu de telle sorte qu'une valeur de moment de freinage de générateur de consigne peut être spécifiée au moyen du dispositif de commande (26) en tenant compte d'une valeur de moment de freinage total de consigne (28) déterminée ou fournie concernant un moment de freinage total de consigne prédéfini par un conducteur au moyen d'un actionnement d'un élément d'actionnement de frein (16, 64) et à exercer au moins sur l'au moins une première roue (20) et l'au moins une deuxième roue (24) et d'une valeur de moment de freinage hydraulique déterminée, prédéfinie ou estimée concernant un moment de freinage hydraulique de l'au moins un premier cylindre de frein (14) sur au moins la première roue (20), un signal de commande de moteur (32) pouvant également être délivré au moteur électrique (22) au moyen du dispositif de commande (26), par lequel le moteur électrique (22) peut être commandé de telle sorte qu'un moment de freinage de générateur correspondant à la valeur de moment de freinage de générateur de consigne peut être exercé sur au moins la deuxième roue (24) au moyen du moteur électrique (22) ;
**caractérisé en ce que**
la valeur de moment de freinage de générateur de consigne peut être spécifiée au moyen du dispositif de commande (26) et le moteur électrique (22) peut être commandé au moyen du dispositif de commande (26) de telle sorte que le moment de freinage de générateur correspond à une différence entre le moment de freinage total de consigne et le moment de freinage hydraulique.

2. Système de freinage selon la revendication 1, la valeur de moment de freinage hydraulique pouvant en plus être prédéfinie au moyen du dispositif de commande (26) en tenant compte de la valeur de moment de freinage total de consigne (28) et d'une information déterminée ou fournie concernant un moment de freinage de générateur possible maximal pouvant être exercé, au moins un signal de commande de vanne et/ou de pompe (34) pouvant également être délivré au moyen du dispositif de commande (26) à au moins une vanne (36, 38, 54, 56) et/ou au moins une pompe (40, 58) du dispositif de freinage hydraulique (10), par lequel l'au moins une vanne (36, 38, 54, 56) et/ou l'au moins une pompe (40, 58) peuvent être commandées de telle sorte que le moment de freinage hydraulique peut être exercé sur au moins la première roue (20) conformément à la valeur de moment de freinage hydraulique prédéfinie.

3. Système de freinage selon la revendication 1 ou 2, le moteur électrique (22) étant un moteur de moyeu de roue.

4. Système de freinage selon l'une des revendications précédentes, le premier circuit de frein (18) comportant une première vanne d'admission de roue (36), une première vanne de décharge de roue (38) et une première pompe (40).

5. Système de freinage selon l'une des revendications précédentes, le dispositif de freinage hydraulique (10) comportant un deuxième circuit de frein (50) auquel est raccordé ou peut être raccordé le premier cylindre de frein (14) ou un deuxième cylindre de frein (52) pouvant être affecté à la première roue (20).

6. Système de freinage selon la revendication 5, le deuxième circuit de frein (50) comportant une deuxième vanne d'admission de roue (54), une deuxième vanne de décharge de roue (56) et une deuxième pompe (58).

7. Système de freinage selon la revendication 5 ou 6, le deuxième circuit de frein (50) étant raccordé ou pouvant être raccordé au premier maître-cylindre de frein (12) ou à un deuxième maître-cylindre de frein (62) .

8. Motocyclette équipée d'un système de freinage selon l'une des revendications précédentes.

9. Motocyclette selon la revendication 8, la motocyclette étant un véhicule à voie unique, un tricycle motorisé, un cyclomoteur, un vélomoteur, une pétrolette, un scooter, une mobylette, une bicyclette avec moteur d'assistance et/ou un scooter électrique.

10. Procédé pour freiner une motocyclette, comprenant les étapes suivantes :
détermination d'une valeur de moment de freinage total de consigne (28) concernant un moment de freinage total de consigne prédéfini par un conducteur au moyen d'un actionnement d'un élément d'actionnement de frein (16, 64) et à exercer au moins sur une première roue (20) et une deuxième roue (24) de la motocyclette (S10) ;
spécification d'une valeur de moment de freinage de générateur de consigne en tenant compte de la valeur de moment de freinage total de consigne (28) déterminée et d'une valeur de moment de freinage hydraulique déterminée, prédéfinie ou estimée concernant un moment de freinage hydraulique, lequel est exercé sur au moins la première roue (20) de la motocyclette au moyen d'au moins un premier cylindre de frein (14) d'un premier dispositif de freinage hydraulique (10), lequel est relié ou peut être relié hydrauliquement à un premier maître-cylindre de frein (12) du dispositif de freinage hydraulique (10) par le biais d'au moins un premier circuit de frein (18) (S11) ; et
commande d'un moteur électrique (22) de telle sorte qu'un moment de freinage de générateur correspondant à la valeur de moment de freinage de générateur de consigne est exercé au moins sur la deuxième roue (24) au moyen du moteur électrique (22) (S12), l'au moins une deuxième roue (24), en tant qu'au moins une roue exempte de cylindre de frein (24), étant freinée exclusivement au moyen du moteur électrique (22) ;
**caractérisé en ce que**
la valeur de moment de freinage de générateur de consigne est spécifiée et le moteur électrique (22) est commandé de telle sorte que le moment de freinage de générateur correspond à une différence entre le moment de freinage total de consigne et le moment de freinage hydraulique.

11. Procédé selon la revendication 10, comprenant les étapes supplémentaires (S13) :
prédéfinition de la valeur de moment de freinage hydraulique en tenant compte de la valeur de moment de freinage total de consigne (28) et d'une information déterminée ou fournie concernant un moment de freinage de générateur possible maximal pouvant être exercé ; et
commande d'au moins une vanne (36, 38, 54, 56) et/ou d'au moins une pompe (40, 58) du dispositif de freinage hydraulique (10) de telle sorte que le moment de freinage hydraulique est exercé sur au moins la première roue (20) conformément à la valeur de moment de freinage hydraulique prédéfinie.

12. Procédé selon la revendication 10 ou 11, un véhicule à voie unique, un tricycle motorisé, un cyclomoteur, un vélomoteur, une pétrolette, un scooter, une mobylette, une bicyclette avec moteur d'assistance et/ou un scooter électrique étant freinés en tant que motocyclette.
